Europäisches Patentamt

European Patent Office

Office européen des brevets

(19)

(11) Numéro de publication : **0 160 588**
**B1**

# (12) FASCICULE DE BREVET EUROPÉEN

(45) Date de publication du fascicule du brevet :
02.12.87

(51) Int. Cl.⁴ : **F 16 F   1/16**, B 60 G 21/04

(21) Numéro de dépôt : **85400510.5**

(22) Date de dépôt : **18.03.85**

(54) **Barre de torsion tubulaire.**

(30) *Priorité :* 20.03.84 FR 8404616

(43) Date de publication de la demande :
06.11.85 Bulletin 85/45

(45) Mention de la délivrance du brevet :
02.12.87 Bulletin 87/49

(84) Etats contractants désignés :
**DE GB IT**

(56) Documents cités :
**DE-U- 7 223 377**
**DE-U- 7 924 744**
**FR-A- 2 099 149**
**FR-A- 2 148 907**
**US-A- 3 856 289**
**US-A- 4 138 141**
**US-A- 4 231 555**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Penot, Jean**
**127, avenue de la République**
**F-94800 Villejuif (FR)**

(74) Mandataire : **Boivin, Claude**
**9, rue Edouard-Charton**
**F-78000 Versailles (FR)**

Jouve, 18, rue St-Denis, 75001 Paris, France

## Description

La présente invention concerne les barres de torsion tubulaires destinées principalement à être utilisées dans les suspensions de véhicule ou bien comme barres anti-roulis ou anti-devers.

Les barres de torsion pour suspensions de véhicule comportent, à chacune de leurs extrémités, des cannelures ou dents externes permettant un montage de la barre lui laissant une certaine liberté axiale, et un filetage interne permettant la fixation par un boulon d'une butée limitant son déplacement axial.

Dans la pratique ces barres de torsion ont des dimensions calculées pour présenter les caractéristiques optimales. En particulier, pour que les cannelures et le filetage n'affaiblissent pas la barre de torsion, il faut que le diamètre extérieur au fond des cannelures ou dents soit au moins égal au diamètre nominal extérieur de la barre et que le diamètre intérieur à fond de filet soit au plus égal à son diamètre nominal intérieur. Pour réaliser ces conditions, on prévoit, à chacune des extrémités de la barre, une surépaisseur faisant saillie aussi bien extérieurement qu'intérieurement par rapport à la paroi de cette barre et on forme dans cette surépaisseur les cannelures ou dents externes ainsi que le filetage intérieur (voir par exemple DE-U-7 924 744).

Le plus souvent la barre de torsion est mono-pièce et les surépaisseurs sont réalisées à la forge par refoulement du métal à chaud.

On peut également souder à chacune des extrémités de la barre une pièce usinée comportant des cannelures ou dents externes et de filetage interne.

La présente invention a pour objet un autre mode de réalisation de cette barre de torsion.

La barre de torsion selon l'invention comporte à chacune de ses extrémités une surépaisseur qui fait saillie à la fois extérieurement et intérieurement par rapport à la paroi du tube et qui comporte des cannelures ou dents externes et un filetage interne, et est caractérisée en ce qu'elle est munie, à chaque extrémité, d'un insert introduit à la forge dont la mise en place a entraîné, par refoulement du métal, une augmentation du diamètre extérieur de la barre et dans lequel est ménagé le filetage interne.

Dans un mode de réalisation préféré de l'invention, l'insert est constitué par une pièce de révolution dont les parties interne et externe sont respectivement approximativement tronconique et approximativement cylindrique. Son profil est défini de manière à opposer une résistance positive à l'extraction. Il comporte des zones concaves et des zones convexes. Il pourrait comporter par exemple une zone concave dans sa partie interne et une zone concave et deux zones convexes dans sa partie externe.

Les cannelures externes et le filetage interne peuvent être usinés après l'introduction de l'insert. En variante, l'insert peut être fileté préalablement à son introduction, les cannelures étant forgées pendant cette introduction.

On a décrit ci-après, à titre d'exemple non limitatif, un mode de réalisation de la barre selon l'invention, avec référence au dessin annexé dans lequel :

La Figure 1 montre en coupe une extrémité de la barre et l'insert, avant introduction de celui-ci ;

La Figure 2 est une vue semblable à la Figure 1, après l'introduction de l'insert.

Telle qu'elle est représentée au dessin, la barre de torsion est constituée par une barre tubulaire 1 dans chaque extrémité de laquelle est introduite à la forge, à chaud ou à froid, un insert 2.

L'insert 2 est constitué par une pièce de révolution comportant une partie approximativement cylindrique 2a de diamètre extérieur supérieur au diamètre intérieur de la barre et une partie approximativement tronconique 2b dont l'extrémité a un diamètre inférieur à ce diamètre intérieur. Il est percé d'un trou axial 3 qui est muni d'un filetage interne 4 du côté de la face extérieure de la partie 2a. Il comporte dans sa partie 2b une concavité 2c et dans sa partie 2a une concavité 2d et deux zones convexes 2e et 2f.

Le diamètre du perçage 3 est déterminé de manière que le diamètre à fond de filet du taraudage 4 soit inférieur au diamètre intérieur du tube 1.

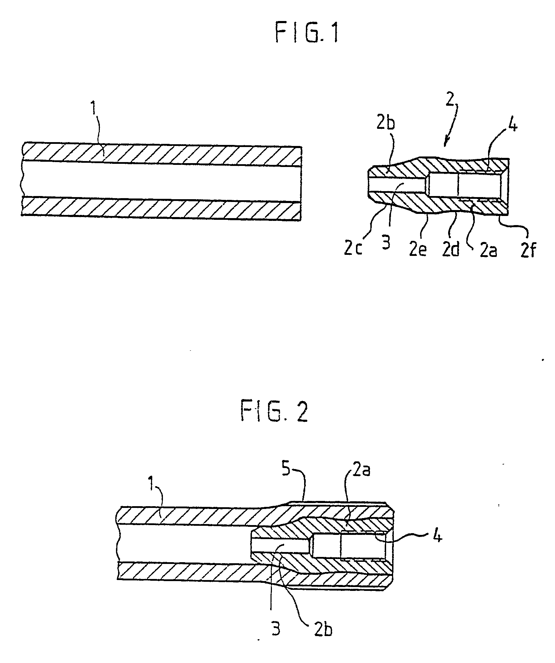

Lorsqu'on introduit l'insert 2 dans l'une des extrémités de la barre 1, il déforme cette extrémité en l'élargissant, comme on le voit à la Figure 2. Ladite extrémité présente ainsi une surépaisseur et ses faces extérieure et intérieure font saillie par rapport respectivement à la face extérieure du tube 1 et à sa face intérieure.

L'extrémité de la barre est munie de cannelures 5. Celles-ci peuvent être usinées par roulage après l'introduction de l'insert ou bien forgées simultanément avec l'introduction de l'insert. On voit que, grâce à la déformation produite par la mise en place de l'insert 2, le diamètre au fond des cannelures est supérieur au diamètre extérieur du tube.

La barre de torsion peut ainsi être réalisée avec ses cannelures externes et son filetage interne sans qu'une opération d'usinage soit nécessaire après l'introduction des inserts à la forge.

## Revendications

1. Barre de torsion tubulaire comportant à chacune de ses extrémités une surépaisseur qui fait saillie à la fois extérieurement et intérieurement par rapport à la paroi du tube et qui comporte des cannelures ou dents externes (5) et un filetage interne (4), caractérisée en ce qu'elle est munie, à chaque extrémité, d'un insert (2) introduit à la forge dont la mise en place a entraîné, par refoulement du métal, une augmentation du diamètre extérieur de la barre (1) et dans lequel est ménagé le filetage interne (4).

2. Barre de torsion selon la revendication 1, caractérisée en ce que l'insert (2) est constitué par une pièce de révolution dont les parties interne (2b) et externe (2a) sont respectivement approximativement tronconique et approximativement cylindrique.

3. Barre de torsion selon la revendication 1 ou 2, caractérisée en ce que l'insert comporte dans sa partie externe et/ou sa partie interne des zones concaves et des zones convexes.

4. Barre de torsion selon l'une des revendications 1 à 3, caractérisée en ce que les cannelures externes (5) et le filetage interne (4) sont usinés après l'introduction de l'insert.

5. Barre de torsion selon l'une des revendications 1 à 3, caractérisée en ce que l'insert (2) est fileté préalablement à son introduction, les cannelures (5) étant forgées pendant cette introduction.

## Claims

1. Tubular torsion bar having at each of its ends an extra thick portion which projects both externally and internally with respect to the wall of the tube and which includes external splines for teeth (5) and an internal thread (4), characterized in that it is provided, at each end, with an insert (2) introduced by forging whose positioning results, by upsetting of the metal, in an increase of the external diameter of the bar (1) and in which the internal thread (4) is formed.

2. Torsion bar according to claim 1, characterized in that the insert (2) is formed by a piece of revolution whose internal (2b) and external (2a) parts are respectively approximately of a truncated cone shape and approximately cylindrical.

3. Torsion bar according to claim 1 or 2, characterized in that the insert has in its external part and/or its internal part concave zones and convex zones.

4. Torsion bar according to one of claims 1 to 3, characterized in that the external splines (5) and the internal thread (4) are machined after introduction of the insert.

5. Torsion bar according to one of claims 1 to 3, characterized in that the insert (2) is threaded before its introduction, the splines (5) being forged during such introduction.

## Patentansprüche

1. Rohrförmige Drehstabfeder, die an jedem ihrer Enden eine Überdicke aufweist, welche in Bezug auf die Rohrwand sowohl nach außen als auch nach innen ragt und die an der Außenseite Nuten oder Zähne (5) und an der Innenseite ein Gewinde (4) aufweist, dadurch gekennzeichnet, daß sie an jedem Ende mit einem beim Schmieden eingeführten Einsatzstück (2) versehen ist, dessen Einfügung durch Stauchung des Metalls eine Vergrößerung des Außendurchmessers der Stabfeder (1) hervorgerufen hat und in dem das innere Gewinde (4) angeordnet ist.

2. Drehstabfeder nach Anspruch 1, dadurch gekennzeichnet, daß das Einsatzstück (2) durch ein Drehstück gebildet ist, dessen Innen- (2b) und Außenteile (2a) jeweils angenähert kegelstumpfförmig und angenähert zylindrisch ausgebildet sind.

3. Drehstabfeder nach Anspruch 1 oder 2, dadurch gekennzeichnet, daß das Einsatzstück an seinem Außenteil und/oder an seinem Innenteil konkave und konvexe Zonen aufweist.

4. Drehstabfeder nach einem der Ansprüche 1 bis 3, dadurch gekennzeichnet, daß die äußeren Nuten (5) und das innere Gewinde (4) nach der Einfügung des Einsatzstückes hergestellt sind.

5. Drehstabfeder nach einem der Ansprüche 1 bis 3, dadurch gekennzeichnet, daß das Einsatzstück (2) vor seiner Einfügung mit einem Gewinde versehen wird und die Nuten (5) während dieser Einfügung geschmiedet werden.

FIG. 1

FIG. 2